# EUROPÄISCHE PATENTANMELDUNG

(11) **EP 1 375 002 A1**
(43) Veröffentlichungstag der Anmeldung: **02.01.2004**
(21) Anmeldenummer: 03014362.2
(22) Anmeldetag: 26.06.2003
(51) Int. Cl.: B02C 18/00, B08B 15/00

(54) **Dokumentenvernichter, insbesondere für eine Absauganlage**

(30) Priorität: 26.06.2002 DE 10229684
(71) Anmelder: SCHLEICHER & Co. INTERNATIONAL AKTIENGESELLSCHAFT, D-88677 Markdorf/Bodensee (DE)
(72) Erfinder: Dieck, E. Leopold, Dr., 88212 Ravensburg (DE); Möller, Jochen, 88677 Markdorf (DE)
(74) Vertreter: Patentanwälte , Ruff, Wilhelm, Beier, Dauster & Partner

(57) **Zusammenfassung**

Bei einem Ausführungsbeispiel eines erfindungsgemäßen Dokumentenvernichters mit einem Schneidwerk (11) ist unter dem Schneidwerk ein Zwischenspeicher (14) für geschnittene Partikel (15) vorgesehen. Von dem Zwischenspeicher (14) führt über einen Verschluß (19) ein Absaugrohr (20) zu einer zentralen Absaugung. Der Zwischenspeicher (14) hat die Form eines schrägen Kegels, wodurch sich ein angesammelter und nach unten abzutransportierender Schüttkegel (16) nicht verklumpt. Dazu liegt der Verschluß (19) nicht zentral zu dem Querschnitt des Zwischenspeichers (20).

Zusätzlich können in den Wandungen (25, 26, 27) des Zwischenspeichers (14) Öffnungen (29) vorgesehen sein. Durch diese Öffnungen kann beim Absaugen der Partikel (15) Umgebungsluft zur Auflockerung der Partikel angesaugt werden.

## Beschreibung

### Anwendungsgebiet und Stand der Technik

Die Erfindung betrifft einen Dokumentenvernichter gemäß dem Oberbegriff des Anspruchs 1. Dieser Dokumentenvernichter ist dazu ausgebildet, mit einer Anlage zur Abführung von geschnittenen Partikeln mehrerer Dokumentenvernichter, insbesondere mittels Absaugung, zusammenzuarbeiten.

Eine solche Anlage ist in der DE 199 34 818 beschrieben. Dabei sind in einem Gebäude mehrere Dokumentenvernichter mit Absaugleitungen versehen, die zu zentralen Sammelmitteln in Form einer Absaugeinrichtung führen.

Hier besteht die Problematik, dass in einem Zwischenspeicher, sogenannten Sammelbehälter, die Partikel durch ihr Gewicht verklumpen. Eine Absaugung wird dadurch erschwert oder sogar unmöglich.

### Aufgabe und Lösung

Der Erfindung liegt die Aufgabe zugrunde, einen eingangs genannten Dokumentenvernichter zu schaffen, mit dem die Probleme des Standes der Technik gelöst werden können und der es insbesondere ermöglicht, effizient mit einer zentralen Absauganlage zusammenzuwirken und eine gute Absaugung der geschnittenen Partikel zu gewährleisten.

Gelöst wird diese Aufgabe durch einen Dokumentenvernichter mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist der Dokumentenvernichter eine Abführung geschnittener Partikel von dem Schneidwerk in den Zwischenspeicher auf. Von diesem erfindungsgemässen Zwischenspeicher aus wiederum erfolgt die Absaugung. Hierzu ist an dem Zwischenspeicher eine Absaugöffnung vorgesehen. Der Zwischenspeicher kann im wesentlichen geschlossen sein, insbesondere mit im wesentlichen geschlossenen Wandungen, die vorteilhaft zumindest eine Seitenbegrenzung des Zwischenspeichers bilden. Die Wandungen können dabei stabil ausgeführt sein. Der Zwischenspeicher bzw. die Wandungen laufen vorteilhaft nach unten auf die Absaugöffnung hin mit abnehmendem Querschnitt aufeinander zu. Dadurch wird gewährleistet, dass die Partikel zu der Absaugöffnung hin selbsttätig nachrutschen. So wird erreicht, dass sich der von den geschnittenen Partikeln gebildete Schüttkegel nicht verdichtet, sondern im wesentlichen schräg abläuft.

Somit kann vorgesehen werden, dass geschnittene Partikel in dem Zwischenspeicher für eine gewisse Zeit oder bis zu einer bestimmten Menge gesammelt werden. Dann kann eine Absaugung erfolgen. Dies hat den großen Vorteil, dass pro Dokumentenvernichter nicht so oft bzw. nicht permanent abgesaugt werden muß.

Der Zwischenspeicher kann vorteilhaft im wesentlichen als Raum, Kammer oder Behälter ausgebildet sein. Für die Dimensionierung seiner Größe kann als Anhaltswert eine Partikelmenge genommen werden, die bei einer bestimmten Anzahl von für diesen Dokumentenvernichter charakteristischen durchschnittlichen Schneidvorgängen anfällt. Dies können beispielsweise zwischen 10 und mehreren 100 Schneidvorgängen sein. Alternativ kann, um eine gewisse Größe nicht zu überschreiten, das Volumen zwischen 5l und bis zu 100l, vorzugsweise zwischen 2l und 20l, liegen. Damit ist es immer noch möglich, derartige Dokumentenvernichter ausreichend klein zu gestalten, damit sie wenig wertvollen Büroraum einnehmen. Schließlich ist dies einer der Hauptvorteile von zentralen Absauganlagen.

Zu Details für eine Absauganlage wird auf die vorgenannte DE 199 34 818 verwiesen. Deren Wortlaut wird durch ausdrückliche Bezugnahme zum Inhalt der Beschreibung gemacht.

Bei einer bevorzugten Ausgestaltung der Erfindung ist vorgesehen, dass die Absaugöffnung in senkrechter Richtung gesehen nicht zentral im Flächenquerschnitt des Zwischenspeichers liegt, sondern zumindest ein Stück seitlich dazu versetzt.

Des weiteren können die Wandungen in Richtung auf die Absaugöffnung im wesentlichen kontinuierlich ohne größere Richtungsänderungen verlaufen. Im Querschnitt wiederum können sie Knicke und/oder Kanten zueinander aufweisen. Dies kann der Fall sein, wenn beispielsweise vier im wesentlichen ebene Wandungen vorgesehen sind zur Seitenbegrenzung und diese einen rechteckigen Querschnitt bilden.

Hier ist es möglich, wenigstens einen Teil der Wandungen des Zwischenspeichers, beispielsweise zwei Wandungen, wesentlich geneigter bzw. schräger auszuführen als den übrigen Teil der Wandungen. Dadurch, insbesondere in Zusammenwirken mit der seitlich versetzten Absaugöffnung, wird eine Art schräger Trichter gebildet. Dieser verhindert, dass sich die Partikel durch ständiges Zusammenschieben zu einem Klumpen verdichten. Der durch unterschiedlich schräge Ausbildungen der Wandungen erzeugte Schüttkegel aus Partikeln in dem Zwischenbehälter dagegen kann im wesentlichen nacheinander abgesaugt werden. Es ist beispielsweise möglich, zwei Wandungen senkrecht auszubilden und zwei Wandungen, die insbesondere aneinander anschließen, schräg geneigt auszubilden.

Weiters ist es mit demselben Funktionsprinzip möglich, den Zwischenspeicher mit rundem Querschnitt auszubilden. Dabei können Bereiche der Wandung unterschiedlich stark geneigt sein um so das oben genannte Verklumpen zu vermeiden.

In weiterer Ausgestaltung der Erfindung ist es möglich, die Wandungen des Zwischenspeichers luftdurchlässig auszubilden. Dazu können sie beispielsweise perforiert sein oder Durchbrüche aufweisen. Die Luftdurchlässigkeit kann sich im wesentlichen über den gesamten Bereich der Wandungen erstrecken. Sie kann sich alternativ auch auf bestimmte, funktional besonders günstige Bereiche erstrecken.

Bei einer bevorzugten Ausgestaltungsmöglichkeit der Erfindung sind die Durchbrüche mit der Umgebung luftführend verbunden derart, dass bei Absaugung von Partikeln aus dem Zwischenspeicher Umgebungsluft angesaugt wird. Sie strömt durch die angesammelten Partikel hindurch zu der Absaugöffnung. Alternativ kann gezielt Druckluft eingesetzt werden.

Weiters ist es möglich, an der Absaugöffnung einen Verschluß, der insbesondere im wesentlichen luftdicht ist, vorzusehen. Dadurch ist es möglich, an der Absaugöffnung permanent den Unterdruck der Absauganlage anliegen zu lassen. Durch Öffnen des Verschlusses wird dann der Zwischenspeicher des Dokumentenvernichters geleert. Der Verschluss kann beispielsweise mittels Druckluft betätigt werden und entsprechend ausgebildet sein.

Bei einem Druckluftanschluss an den Dokumentenvernichter und/oder der Anlage ist es möglich, einen Teil der Druckluft mittels eines Kanals oder dergleichen zu einem oben beschriebenen Durchbruch oder einer luftdurchlässigen Wandung zu leiten. Durch das Anblasen speziell mit Druckluft können die Partikel noch besser verwirbelt werden. Das Verwirbeln mit Druckluft erfolgt bevorzugt gleichzeitig oder vor der Betätigung des Verschlusses zum Absaugen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen dargestellt und werden im folgenden näher erläutert. In den Zeichnungen zeigen:
- Fig. 1: eine Seitenansicht einer möglichen Ausbildung eines Dokumentenvernichters mit Zwischenspeicher und Absaugung,
- Fig. 2: einen Zwischenspeicher mit ebenen Wandungen in Draufsicht,
- Fig. 3: einen Zwischenspeicher nach Art eines Konus in Draufsicht und
- Fig. 4: einen Zwischenspeicher schrägen Wandungen, wobei zwei Wandungen nach innen geneigt sind.

### Detaillierte Beschreibung der Ausführungsbeispiele

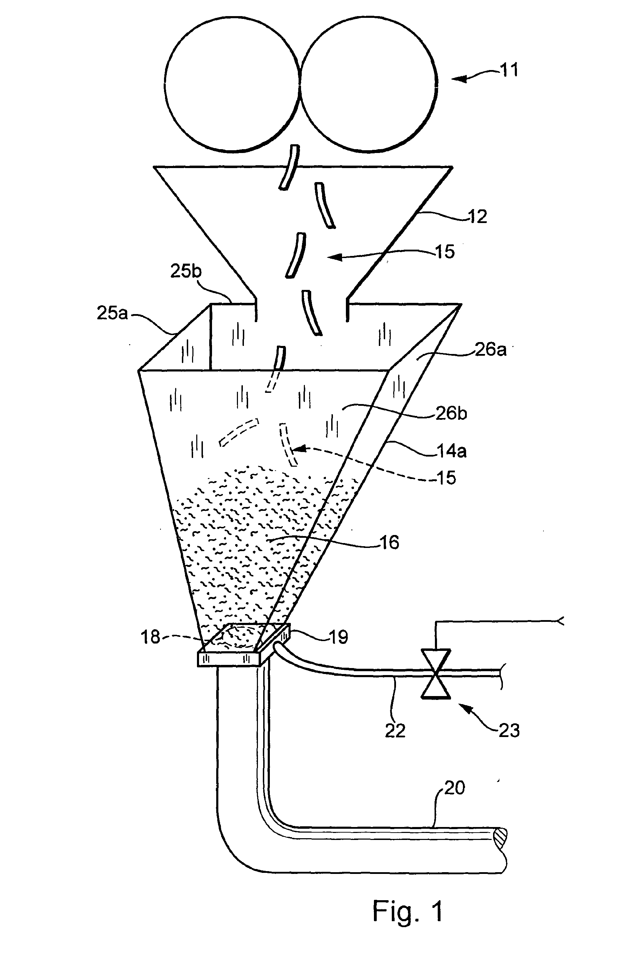

In Fig. 1 ist eine Seitenansicht einer möglichen Ausbildung eines erfindungsgemäßen Dokumentenvernichters dargestellt. Diese Darstellung ist, ebenso wie die weiteren Darstellungen, schematisch zu verstehen.

Dargestellt ist ein Schneidwerk 11 aus gegensinnig umlaufenden, ineinander greifenden Schneidwalzen. Dieses ist für Dokumentenvernichter aus dem Stand der Technik bekannt. Unterhalb des Schneidwerks 11 ist ein Trichter 12 vorgesehen, der sämtliche aus dem Schneidwerk 11 fallenden geschnittenen Partikeln 15 in den Zwischenspeicher 14a lenkt. Wie in Fig. 1 zu erkennen ist, sammeln sich die Partikel 15 in dem Zwischenspeicher 14a und bilden den Haufen 16.

Unten ist an dem Zwischenspeicher 14a eine Absaugöffnung 18 vorgesehen. Diese ist mittels des Verschlusses 19 mit dem Absaugrohr 20 verbunden, welches zu einer vorbeschriebenen Absauganlage führen kann. Eine solche Absauganlage ist, wie zuvor erwähnt, in der DE 199 34 818 beschrieben, deren Wortlaut hiermit durch ausdrückliche Bezugnahme zum Inhalt der Beschreibung gemacht wird.

Der Verschluss 19, und damit die Absaugöffnung 18, ist öffenbar bzw. ansteuerbar über die Druckluftleitung 22. Diese Druckluftleitung 22 führt zu einer zentralen Druckluftverteilanlage. Diese kann vorteilhaft entsprechend den Absaugrohren 20 bzw. der Absauganlage in einem Gebäude verlaufen. Über das Ventil 23 kann der Verschluß 19 mittels der Druckluft aus der Druckluftleitung 22 betätigt werden, insbesondere geöffnet und geschlossen.

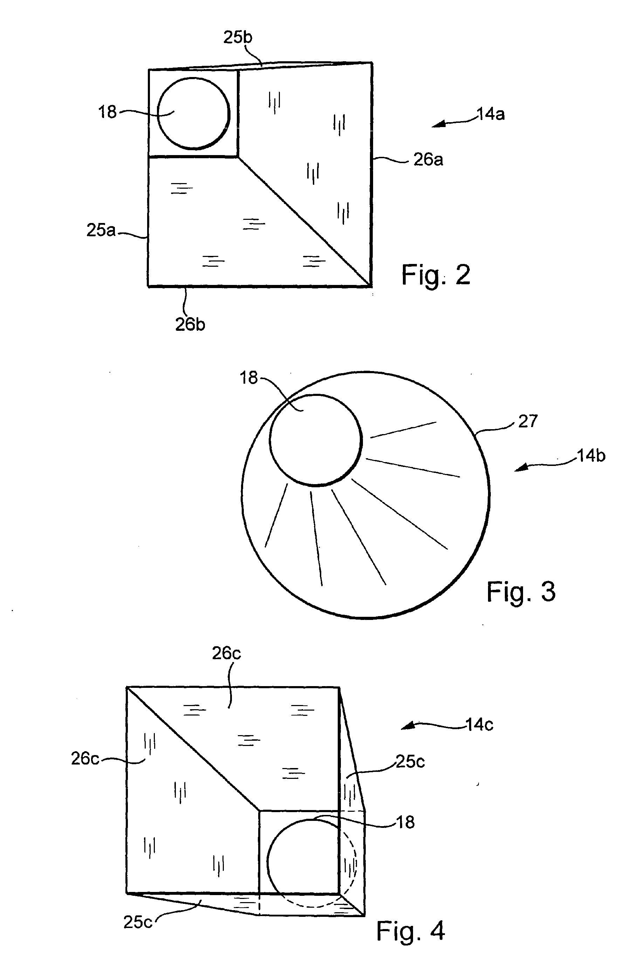

In Fig. 2 ist in Draufsicht eine mögliche Ausbildung der Erfindung dargestellt, bei der der Zwischenspeicher 14a aus Fig. 1 zwei gerade Wandungen 25a und 25b sowie zwei schräg dazu verlaufende Wandungen 26a und 26b aufweist. Diese verlaufen nach unten auf die Absaugöffnung 18 zu. Diese ist, wie aus Fig. 2 deutlich zu erkennen ist, in dem Eck zwischen den beiden geraden Wandungen 25 angeordnet. Dies bedeutet, dass durch die schräg verlaufenden Wandungen 26a und 26b ein sich durch den Haufen 16 gebildeter Kegel nicht verklumpt, wenn die Partikel 15 von der Absauganlage nach unten abgesaugt werden und nachrutschen. Somit können ein Verklumpen der Partikel 15 und Probleme beim Absaugen verhindert werden.

Der Winkel, in dem die schrägen Wandungen 26 zu den geraden Wandungen 25 verlaufen, kann beispielsweise aus Fig. 1 oder Fig. 4 entnommen werden. Er beträgt in den dargestellten Beispielen etwa 30°, kann aber auch flacher oder steiler gewählt werden. Die Wandungen sind im wesentlichen eben.

Aus der Draufsicht in Fig. 3 ist ein Zwischenspeicher 14b mit einer runden, kantenlosen Wandung 27 dargestellt. Auch hier läuft der Zwischenspeicher 14b in seinem Verlauf von oben nach unten auf die Absaugöffnung 18 zu. Diese ist außerhalb des Flächenmittelpunkts zumindest des oberen Randes des Zwischenspeichers 14b angeordnet. Mit einem solchen Zwischenspeicher 14b gemäß Fig. 3 wird der gleiche Effekt erzielt wie mit einem Zwischenspeicher gemäß Fig. 2. Auch hier bildet nämlich der nach unten rutschende, abgesaugte Schüttkegel 16 keine Verklumpung. Der Zwischenspeicher 14b ist sozusagen eine abgerundete Variante des Zwischenspeichers 14a.

Wie aus den Fig. 2 und 3 ersichtlich ist, ist es möglich, die Wandungen des Zwischenspeichers 14 weiter zu variieren. Es können beispielsweise Mischformen zwischen ebenen und gebogenen Wandungen vorgesehen werden. Ebenso ist es möglich, Zwischenspeicher mit drei-, fünf- oder mehreckigem Querschnitt auszubilden, ebenso mit ovalem oder eiförmigem Querschnitt. Der Querschnitt kann sich im Verlauf des Zwischenspeichers 14 auf die Absaugöffnung 18 zu auch von der Form her ändern.

In Fig. 4 ist ein Zwischenspeicher 14c mit schrägen Wandungen 25c und 26c dargestellt. Die Wandungen 25c sind, ähnlich wie in Fig. 2, schräg nach außen geneigt. Die Wandungen 26c sind allerdings in Abweichung schräg nach innen, also zum Teil über die Absaugöffnung 18, geneigt. Dabei sind die Wandungen 25c bezüglich des Absolutwerts des Winkels weitaus schräger geneigt als die Wandungen 26c.

Ein vereinfachter Verschluß für die Ansaugöffnung 18 kann als mit Federkraft nach unten bewegliche, nach oben beaufschlagte Klappe ausgebildet sein. Die Federkraft kann so dimensioniert sein, dass sie der Gewichtskraft eines mit Partikeln 15 gefüllten Haufens 16 widersteht. Kommt dagegen der Unterdruck über das Absaugrohr 20 hinzu, öffnet sich die Klappe nach unten und die Absaugung beginnt. Dies ist für Absauganlagen von Vorteil, bei denen nicht permanenter Saugbetrieb gegeben ist.

Wie aus den Darstellungen ersichtlich wird, kann mit den dargestellten Anordnungen das Absaugen von Partikeln 15 durch Ansteuern des Verschlusses 19 beliebig gesteuert werden. Ein die Absaugung auslösendes Signal kann beispielsweise von einer Sensorvorrichtung an dem Zwischenspeicher kommen. Die Sensorvorrichtung kann dabei beispielsweise als Füllstandsanzeige ausgebildet sein und evtl. optische Sensoren aufweisen. Bei einer bestimmten Füllhöhe, beispielsweise etwa 75% des Fassungsvermögens des Zwischenspeichers, kann die Absaugung einsetzen.

Weiters kann eine Ansteuerung über ein Zeitsignal erfolgen, beispielsweise mit bestimmten Zeitintervallen nach dem Einschalten des jeweiligen Dokumentenvernichters oder unabhängig davon.

## Patentansprüche

1. Dokumentenvernichter mit einem Schneidwerk (11) zur Durchführung eines Partikelschnitts an Schneidgut, mit einer Zuführung für das Schneidgut und einer Abführung der geschnittenen Partikel (15), wobei die Abführung zu einer Anlage (20) zur zentralen Absaugung von geschnittenen Partikeln (15) mehrerer Dokumentenvernichter führt, wobei die Abführung einen Zwischenspeicher (14) für eine gewisse Menge (16) von geschnittenen Partikeln (15) aufweist, wobei der Zwischenspeicher (14) eine Absaugöffnung (18) für die Partikel aufweist und damit an die Anlage angeschlossen ist, **dadurch gekennzeichnet, dass** der Zwischenspeicher (14) im wesentlichen geschlossene Wandungen (25, 26, 27) aufweist und nach unten auf die Absaugöffnung (18) zu mit abnehmendem Querschnitt zulaufend ausgebildet ist.

2. Dokumentenvernichter nach Anspruch 1, **dadurch gekennzeichnet, dass** der Zwischenspeicher (14) für eine Menge (16) von Partikeln (15) ausgebildet ist, die zwischen 10 und 100 Schneidvorgängen des Dokumentenvernichters entspricht, wobei vorzugsweise das Volumen des Zwischenspeichers (14) zwischen 5l und 50l lieg

3. Dokumentenvernichter nach Anspruch 1 oder 2, **dadurch gekennzeichnet, dass** die Absaugöffnung (18) in senkrechter Richtung gesehen nicht zentral im Flächenquerschnitt des Zwischenspeichers (14) liegt.

4. Dokumentenvernichter nach einem der vorhergehenden Ansprüche, **dadurch gekennzeichnet, dass** die Wandungen (25, 26, 27) im Querschnitt Knicke und/oder Kanten zueinander aufweisen, wobei vorzugsweise vier im wesentlichen ebene Wandungen vorgesehen sind und diese Wandungen (25, 26) einen rechteckigen Querschnitt bilden.

5. Dokumentenvernichter nach einem der vorhergehenden Ansprüche, **dadurch gekennzeichnet, dass** wenigstens ein Teil der Wandungen (25, 26) des Zwischenspeichers (14), insbesondere zwei Wandungen (25), wesentlich geneigter verläuft als der übrige Teil, wobei vorzugsweise ein Bereich der Seitenwandung senkrecht verläuft und ein anderer Bereich der Seitenwandung, insbesondere zwei Wandungen (26), nach unten zu schräg aufeinander zu verläuft.

6. Dokumentenvernichter nach einem der vorhergehenden Ansprüche, **dadurch gekennzeichnet, dass** die Wandungen (25, 26, 27) des Zwischenspeichers (14) luftdurchlässig ausgebildet sind, wobei sie vorzugsweise Durchbrüche (29) aufweisen.

7. Dokumentenvernichter nach Anspruch 6, **dadurch gekennzeichnet, dass** die Durchbrüche (29) mit der Umgebung luftführend verbunden sind derart, dass bei Absaugung von Partikeln (15) aus dem Zwischenspeicher (14) Luft durch die Durchbrüche (29) angesaugt wird und durch die angesammelten Partikeln (15) hindurch zu der Absaugöffnung (18) strömt, vorzugsweise unter Verwirbelung der Partikel (15).

8. Dokumentenvernichter nach einem der vorhergehenden Ansprüche, **dadurch gekennzeichnet, dass** der Dokumentenvernichter und/oder die Anlage zur Absaugung einen Druckluftanschluss (22, 23) aufweist, vorzugsweise für einen zur Druckluftbetätigung ausgebildeten Verschluss (19) der Absaugung (20).
